(19) **Europäisches Patentamt**
**European Patent Office**
**Office européen des brevets**

(11) **EP 3 692 388 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **18836346.9**

(22) Anmeldetag: **21.12.2018**

(51) Internationale Patentklassifikation (IPC):
**G01S 5/02** (2010.01)   **G01S 13/74** (2006.01)
**H04W 4/02** (2018.01)   **H04W 4/40** (2018.01)
**G07C 9/00** (2020.01)

(52) Gemeinsame Patentklassifikation (CPC):
**G01S 5/02213; G01S 13/74; G01S 13/762;**
**G01S 13/765; H04L 9/3215; H04W 12/12;**
G01S 5/0289; G07C 9/00309; G07C 2009/00555;
H04W 4/02; H04W 4/40

(86) Internationale Anmeldenummer:
**PCT/EP2018/000584**

(87) Internationale Veröffentlichungsnummer:
**WO 2019/120611 (27.06.2019 Gazette 2019/26)**

(54) **VERFAHREN ZUR PRÜFUNG DER ZUGEHÖRIGKEIT VON FUNKKNOTEN ZU EINER FUNKUMGEBUNG MITTELS EINER AUSWERTUNG VON STÖRSIGNALANTEILEN**

METHOD FOR CHECKING THE ASSOCIATION OF RADIO NODES WITH A RADIO ENVIRONMENT BY EVALUATING INTERFERENCE SIGNAL COMPONENTS

PROCÉDÉ DE VÉRIFICATION DE L'APPARTENANCE DE NOEUDS RADIO À UN ENVIRONNEMENT RADIO, PAR UNE ÉVALUATION DE FRACTIONS DE SIGNAUX PERTURBATEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2017 DE 102017011879**
**26.01.2018 US 201862622689 P**

(43) Veröffentlichungstag der Anmeldung:
**12.08.2020 Patentblatt 2020/33**

(73) Patentinhaber: **Metirionic GmbH**
**01069 Dresden (DE)**

(72) Erfinder: **EGGERT, Dietmar**
**01219 Dresden (DE)**

(74) Vertreter: **Koch Müller**
**Patentanwaltsgesellschaft mbH**
**Maaßstraße 32/1**
**69123 Heidelberg (DE)**

(56) Entgegenhaltungen:
**DE-A1-102015 226 150    US-A1- 2015 208 207**

• **CAO XIANGHUI ET AL: "Ghost-in-ZigBee: Energy Depletion Attack on ZigBee-Based Wireless Networks", IEEE INTERNET OF THINGS JOURNAL, IEEE, USA, Bd. 3, Nr. 5, 1. Oktober 2016 (2016-10-01) , Seiten 816-829, XP011622476, DOI: 10.1109/JIOT.2016.2516102 [gefunden am 2016-09-08]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Prüfung der Zugehörigkeit von Funkknoten zu einer Funkumgebung mit einer Funkknotenmenge von wenigstens drei zueinander beabstandeten Funkknoten mittels einer Auswertung von Störsignalanteilen.

Die DE 10 2009 021 783 A1 ist ein Lokalisierungssystem und ein Verfahren zur Lokalisierung wenigstens eines mobilen Telekommunikationsgeräts mittels Kurzstreckenfunk bekannt.

Im Rahmen von Authentifizierungsverfahren innerhalb drahtloser elektronischer Zugangssysteme werden typischerweise Abstandsermittlungen eingesetzt, um Relais-Angriffe auf drahtlose Zugangssysteme abzuwehren. Man spricht typischerweise von Distance-Bounding. Die Authentifizierung basiert ansonsten typischerweise auf kryptologischen Verfahren. Meist besitzen alle autorisierten Parteien Kenntnis über einen Schlüssel sowie über zu verwendende Authentifizierungs-Algorithmen.

Nachteilig ist, dass mittlerweile auch eine Manipulation der Abstandsbestimmung möglich ist.

Die Schwächen von phasenbasierten Distance Bounding Verfahren hinsichtlich eines Relais-Angriffs werden beispielsweise in A. R. S. C. Hildur Olafsdottir, "On the Security of Carrier Phase-based Ranging", https:// www.researchgate.net/publication/254008732_Physical-layer_attacks_ on_chirp-based_ranging_systems, Proceedings of Cryptographic Hardware and Embedded Systems (CHES) aufgezeigt.

Vor diesem Hintergrund besteht die Aufgabe der Erfindung darin, eine Vorrichtung anzugeben, die den Stand der Technik weiterbildet.

Die Erfindung betrifft ein Verfahren zur Prüfung der Zugehörigkeit von Funcknoten zu einer Funkumgebung mit einer Funkknotenmenge von wenigstens drei zueinander beabstandeten Funkknoten mittels einer Auswertung von Störsignalanteilen.

Die DE 10 2009 021 783 A1 ist ein Lokalisierungssystem und ein Verfahren zur Lokalisierung wenigstens eines mobilen Telekommunikationsgeräts mittels Kurzstreckenfunk bekannt.

Weitere Verfahren zur Authentifizierung bzw. zur Verhinderung von einer Relais Attacken sind aus der DE 10 2015 226150 A1, der US 2015 / 208207 A1  und aus Cao Xiangui et al: "Ghost In Zigbee: Energy Depletion Attakc on ZigBee-Based Wireless Networks", IEEE Internet of Things Journal, IEEE, USA, Bd. 3, Nr. 5, 1. Oktober 2016, Seiten 816-829 XP011622476 bekannt.

Im Rahmen von Authentifizierungsverfahren innerhalb drahtloser elektronischer Zugangssysteme werden typischerweise Abstandsermittlungen eingesetzt, um Relais-Angriffe auf drahtlose Zugangssysteme abzuwehren. Man spricht typischerweise von Distance-Bounding. Die Authentifizierung basiert ansonsten typischerweise auf kryptologischen Verfahren. Meist besitzen alle autorisierten Parteien Kenntnis über einen Schlüssel sowie über zu verwendende Authentifizierungs-Algorithmen.

Nachteilig ist, dass mittlerweile auch eine Manipulation der Abstandsbestimmung möglich ist.

Die Schwächen von phasenbasierten Distance Bounding Verfahren hinsichtlich eines Relais-Angriffs werden beispielsweise in A. R. S. C. Hildur Olafsdottlr, "On the Security of Carrier Phase-based Ranging", https:// www.researchgate.net/publication/254008732_Physical-layer_attacks_ on_chirp-based_ranging_systems, Proceedings of Cryptographic Hardware and Embedded Systems (CHES) aufgezeigt.

Vor diesem Hintergrund besteht die Aufgabe der Erfindung darin, eine Vorrichtung anzugeben, die den Stand der Technik weiterbildet.

Die Aufgabe wird durch ein Verfahren zur Prüfung der Zugehörigkeit von Funkknoten und von Objekten zu einer Funkumgebung mit den Merkmalen des Patentanspruchs 1 gelöst. Vorteilhafte Ausgestaltungen der Erfindung sind Gegenstand der Unteransprüche.

Gemäß dem Gegenstand der Erfindung wird ein Verfahren zur Prüfung der Zugehörigkeit von Funkknoten zu einer Funkumgebung mit einer Funkknotenmenge von wenigstens drei zueinander beabstandeten Funkknoten mittels einer Auswertung von Störsignalanteilen, wobei jeder Funkknoten der Funkknotenmenge jeweils eine Funkschnittstelle und einen eigenen Zeitgeber aufweist und zwischen den Zeitgebern der Funkknoten jeweils ein Zeitversatz besteht. Mindestens zwei Funkknoten der Funkknotenmenge sind Referenzfunkknoten, wobei ein Abstand jedes Referenzfunkknotens zu den weiteren Referenzfuncknoten bekannt ist und die Referenzfunkknoten ein Referenzsystem mit einer Funkumgebung bilden. Mindestens ein Funkknoten der Funkknotenmenge ist ein Testfunkknoten, wobei eine Zugehörigkeit des mindestens einen Testfuncknotens zu der Funkumgebung des Referenzsystems geprüft wird.

Das Verfahren umfasst einen Messprozess, einen anschließenden Auswerteprozess und einen Vergleichsprozess. Während des Messprozesses werden von Funkknoten der Funkknotenmenge Signale mit einer Trägerfrequenz gesendet und empfangen, wobei während des Messprozesses mindestens zwei Funkknoten der Funkknotenmenge als Transceiver arbeiten und mindestens ein Funkknoten während des Messprozesses ausschließlich als Transmitter oder ausschließlich als Receiver oder als Transceiver arbeitet.

Der Auswerteprozess umfasst einen Auswerteschritt, wobei in dem Auswerteschritt anhand eines von einem ersten Funkknoten der Funkknotenmenge gesendeten und von einem zweiten Funkknoten der Funkknotenmenge empfangenen Signals ein Störsignalanteil ermittelt wird und während des Auswerteprozesses in einem ersten Durchgang der Auswerteschritt mindestens einmal für mindestens ein Paar von Referenzfunkknoten und in einem zweiten Durchgang mindestens einmal für einen Testfunkknoten und einen Referenzfunkknoten ausgeführt wird.

In einem Vergleichsprozess wird anhand mindestens eines Ergebnisses des ersten Durchgangs und mindestens eines Ergebnisses des zweiten Durchgangs die Zugehörigkeit zu einer Funkumgebung positiv oder negativ beschieden.

Als Störsignalanteil wird der Anteil eines empfangenen Signals bezeichnet, der durch eine Störstrahlungsenergie bewirkt wird. Unter Störstrahlungsenergie wird dabei alle elektromagnetische Energie zusammengefasst, die mittels der Funkknotenantennen der Funkknotenmenge in elektrische Signale umgewandelt wird, ihren Ursprung jedoch außerhalb der Menge der betrachteten Funkknoten hat. Die Störstrahlenenergie wird also von einer oder von mehreren nicht zu der Funkknotenmenge gehörenden Quellen, auch als Störquellen oder Störer bezeichnet, erzeugt.

Störstrahlung kann durch weitere Funksysteme entstehen, die im betrachteten Frequenzbereich elektromagnetische Energie abstrahlen. Sie kann Ihren Ursprung aber auch in elektrischen Anlagen haben. Auch rauschartige Störstrahlung kann ein System beeinflussen, kosmische Strahlung sei als ein Vertreter hier aufgeführt.

Störstrahlung kann sowohl absolut als auch relative, also in Bezug auf ein Referenzsignal, charakterisiert und klassifiziert werden. Dabei stehen eine Vielzahl von Methoden zur Verfügung. Im einfachsten Fall wird eine Störsignalleistung bzw. Störsignalleistungsdichte innerhalb eines Frequenzbands, eine absolute Standardabweichung oder eine relative Standardabweichung hinsichtlich eines Mittelwerts oder eines Referenzsignals ermittelt. Auch eine Korrelationsanalyse im Zeitbereich, eine Spektralanalysen im Frequenzbereich oder eine Signalklassifikation kann zur Charakterisierung der Störquelle eingesetzt werden. Über ein System von mehreren räumlich verteilten Funkknoten ist eine Ermittlung der Position der Störquellen der Störstrahlung möglich.

Die Detektion von Störstrahlung, also von elektromagnetischer Strahlung, die nicht durch das System verursacht wird, eröffnet Möglichkeiten zur Identifikation eines Relais-Angriffs. Diese Störungen sind nicht zeitinvariant und nicht deterministisch. Daraus ergibt sich auch, dass man selbst die Existenz einer Störquelle weder voraussagen noch sich darauf verlassen kann. Daher bilden Störstrahlungsbasierte Merkmale eine gute Basis um Relais-Angriffe zu erkennen. Bevorzugt wird das erfindungsgemäße Verfahren ergänzend zu anderen Verfahren eingesetzt bzw. die Störsignalanteile als ergänzende Datenbasis zu anderen Eigenschaften des Systems für Plausibilitätstests herangezogen.

Als Funkumgebung des Referenzsystems wird der Einfluss der Umgebung auf die empfangenen Funksignale der Funkknoten des Referenzsystems bezeichnet, d.h. das, was die Referenzfunkknoten von ihrer Umgebung sehen. Befindet sich der Testfunkknoten in derselben Umgebung, so sollte er eine ähnliche Funkumgebung sehen.

Unter der Annahme, dass auftretende Störstrahlung auf alle Funkknoten in erster Näherung gleich wirken, beruhen Unterschiede in den von Funkknoten empfangenen Störsignalanteilen allein auf der Lage des jeweiligen Funkknotens, also beispielsweise des Abstands zu der Störquelle und gegebenenfalls der Beschaffenheit des empfangenden Funkknotens. So weist eine Abweichung hinsichtlich der Signalstärke des empfangenen Störsignalanteils auf einen unterschiedlichen Abstand hin.

Ein Abweichen hinsichtlich der Anzahl oder der Art der aus dem Störsignalanteil ermittelten Störquellen weist dahingegen darauf hin, dass sich die empfangenden Funkknoten nicht in derselben Funkumgebung und damit nicht in derselben Umgebung bzw. nicht in unmittelbarer Nähe zueinander befinden. So kann ermittelt werden, ob sich ein Testfunkknoten außerhalb der Umgebung des Referenzsystems befindet, da ein solcher Testfunkknoten in der Regel anderen Störungsquellen ausgesetzt ist als die Referenzknoten des Referenzsystems.

Im Falle einen Relais Angriffs werden die Signale des Referenzsystems, z.B. an einem Automobil, durch ein Relais System empfangen, weitergeleitet und in Nähe des Testfunkknotens, z.B. in einem Autoschlüssel, ausgesendet. Dabei leitet das Relais System nicht nur die Signale des Referenzsystems sondern auch die Signale der Störquellen in der Umgebung Referenzsystems weiter. Die von dem Testfunkknoten empfangenen Signale enthält somit sowohl Merkmale der Störsignalquellen der Funkumgebung des Referenzsystems als auch Merkmale der Störsignalquellen in der Umgebung des Testfunkknotens und unter Umständen zusätzlich Merkmale von Störquellen, die bei der Weiterleitung durch das Relais-System wirksam wurden. Entsprechendes gilt für Signale, welche von dem Testfuncknoten ausgesendet, von dem Relais System weitergeleitet und von dem Referenzsystem empfangen werden.

Die nur zwischen den Referenzfunkknoten ausgetauschten Signale enthalten dahingegen nur die Merkmale der Störquellen, die sich in der Umgebung des Referenzsystems befinden.

Das Verfahren sieht daher unter anderem vor, anhand von Signalen, die entweder von dem Testfunkknoten empfangen oder von dem Testfunkknoten gesendet wurden, Störsignalanteile zu ermitteln und gegebenenfalls die Störquellen aus der zumindest um den Testfunkknoten erweiterten Funkumgebung zu identifizieren und zu charakterisieren. Entsprechend werden anhand von Signalen, welche zwischen Referenzfunkknoten ausgetauscht wurden, Störsignalanteile ermittelt und gegebenenfalls die Störquellen in der Funkumgebung des Referenzsystems identifiziert und charakterisiert.

Besteht eine ausreichende Übereinstimmung zwischen den ermittelten Störsignalanteilen bzw. den identifizierten und charakterisierten Störquellen von Testfunkknoten und Referenzsystem, so wird eine notwendige Bedingung erfüllt, dass sich der Testfunkknoten in der Umgebung des Referenzsystems befindet. Das Maß der Übereinstimmung richtet sich dabei nach den Applikationsanforderungen bzw. dem zu erreichenden Vertrauenslevel. Als Minimalanforderung kann verglichen werden, ob von Null verschiedene Störsignalanteile sowohl hinsichtlich des Testfunkknotens als auch innerhalb des Referenzsystems ermittelt wurden. Darüber hinaus kann die jeweils ermittelte Anzahl der Störquellen, die Art oder die Lage der Störquellen verglichen werden.

Die Entscheidung über die Zugehörigkeit des Testfunkknotens zu der Testumgebung wird bevorzugt anhand mehrere Vergleiche von unterschiedlichen Störquelleneigenschaften, wie Anzahl, Art, Position etc., getroffen, wobei für eine positive Entscheidung beispielsweise alle oder zumindest eine über einem von der Applikation bestimmten Schwellwert liegender Anteil, beispielsweise zumindest 70% oder zumindest 50% der Vergleiche positiv ausfallen müssen.

Es versteht sich, dass die Abstände der Referenzfunkknoten zumindest relativ zueinander bekannt sind, während eine absolute oder zumindest relative Position des Testfunkknotens nicht bekannt ist. Die Referenzfuncknoten bilden über ihre Abstandsbeziehung die Basis für ein ReferenzKoordinatensystem. Die Position des Testfunkknotens oder von Objekten der Umgebung ist innerhalb dieses Koordinatensystems zunächst nicht bekannt und kann mittels des Verfahrens ermittelt werden.

Es versteht sich, dass sich die Funkknoten der Funkknotenmenge abgesehen davon, dass zu den Referenzfunkknoten zumindest relative Abstände bekannt sind, nicht unterscheiden müssen. Insbesondere umfasst beispielsweise jeder Funkknoten eine Empfangseinheit, eine Sendeeinheit, einen Signalprozessor und wenigstens eine Antenne.

Umfasst ein Funkknoten mehrere Antennen, so wird das Sendesignal von einer der Antennen oder von mehreren Antennen abgestrahlt. Beispielsweise strahlen die Antennen während eines Sendezeitraums sequentiell nacheinander ab. Der Sendezeitraum ist hierfür z.B. in mehrere Zeitfenster unterteilt, wobei jeweils eine der Antennen während eines Zeitfensters sendet. Es versteht sich, dass auch der Empfang der Signale entsprechend organisiert sein kann. Die Sendesignale sind bevorzugt unmoduliert.

Zusätzlich zu den Funksignalen, also den während des Messprozesses gesendeten bzw. empfangenen Signalen, ist ein Austausch von Datensignalen über dieselbe Schnittstelle bzw. mittels derselben Sendeeinheit und denselben Antennen möglich. Der weitere Datentransfer erfolgt dabei in demselben Frequenzbereich wie die Signale des Messprozesses oder in einem anderen Frequenzbereich. Alternativ weist jeder Funkknoten eine weitere Datenschnittstelle auf, wobei die weitere Datenschnittstelle auch drahtgebunden oder drahtlos ausgebildet ist. Der weitere Datentransfer über dieselbe oder eine andere Schnittstelle ermöglicht den Austausch von Daten, wie z.B. von ermittelten Signalvektoren, sowie die grobe zeitliche Synchronisation der Funkknoten.

Es versteht sich, dass die Funktionalität der Funkknoten während des Messprozesses unabhängig von der Zuordnung des Funkknotens zu der Gruppe der Referenzfunkknoten oder zu der Gruppe von Testfunkknoten ist. Prinzipiell ist es möglich, dass ein Testfunkknoten in einem ersten Durchlauf des erfindungsgemäßen Verfahrens als Transceiver arbeitet und in einem zweiten Durchlauf ausschließlich als Transmitter oder ausschließlich als Receiver. Entsprechendes gilt auch für die Referenzfunkknoten.

Als Transceiver werden alle Funkknoten bezeichnet, die während des Messprozesses sowohl senden als auch empfangen. Als Transmitter werden Funkknoten bezeichnet, die während des Messprozesses ausschließlich in einem Sendemodus arbeiten und zumindest ein Sendesignal senden. Dahingegen werden Funkknoten, die während des Messprozesses ausschließlich in einem Empfangsmodus arbeiten und zumindest ein Signal empfangen, als Receiver bezeichnet.

Es versteht sich, dass alle mit dem erfindungsgemäßen Verfahren übermittelten Werte bzw. Signalvektoren durch geeignete Verschlüsselungsmechanismen geschützt werden können, um die ablaufenden Vorgänge entsprechend zu schützen. So kann beispielsweise jeder Signalvektor mit einer zeitlich veränderlichen Zahlenfolge belegt werden, die nur den beteiligten bzw. autorisierten Funkknoten a priori bekannt ist.

Ein Vorteil ist, dass ohne zusätzlichen technischen Aufwand und rein auf Basis der Analyse der empfangenen Signale eine Vielzahl von Informationen über Störstrahlungsquellen bzw. Störstrahlenenergieprofile ermittelt werden, wodurch eine große Datenbasis für den Plausibilitätstest erzeugt und die Zuverlässigkeit des Plausibilitätstest erhöht werden kann. Allein durch Rechenaufwand können anhand der Störstrahlenprofile sowohl statische als auch dynamische Informationen über die Umgebung von Funkknoten ermittelt werden.

Das erfindungsgemäße Verfahren ermöglicht ein robustes und effizientes Identifizieren und Abwehren von Relais-Angriffen auf funkbasierte Zugangssysteme. Dabei ist ein einfaches Einbinden des erfindungsgemäßen Verfahrens in etablierte Standards für die drahtlose Kommunikation, z.B. Bluetooth, Bluetooth Smart und Zigbee, möglich. Das erfindungsgemäße Verfahren eignet sich besonders, um bekannte Techniken, wie die Authentifizierung über Funk-Datenkommunikation mit kryptologischen Verfahren, die Umlaufzeitmessung mit geringer Kanalbandbreite unter Nutzung von regulären Datenrahmen auf mehreren Funk-Kanälen oder das Einbinden zusätzlicher Sensorik, zu erweitern. Das Verfahren eignet sich beispielsweise als Alternative oder Ergänzung für das Authentifizieren in Zugangssystems, z.B. im Automobilbereich und kann auch in einfacher Weise mit weiteren Radarsysteme, wie Abstandsradar, Park-Sensorik, Inertial Sensorik für Orientierung, Temperatur, Luftdruck etc. auf Seiten des Automobils bzw. mit Inertial-Sensorik auf Seiten des Schlüssels kombiniert werden.

Gemäß einer ersten Ausführungsform umfasst der Messprozess mindestens zwei Messdurchgängen, wobei in jedem Messdurchgang nacheinander von jedem Transceiver jeweils während eines Sendezeitraums ein Sendesignal mit einer Trägerfrequenz ausgesandt und das ausgesandte Sendesignal zumindest von den weiteren Transceivern während eines Empfangszeitraums empfangen wird, die Sendesignale der Transceiver zumindest während eines Messdurchgangs zueinander kohärent sind, sich die Trägerfrequenz jedes Messdurchgangs von den Trägerfrequenzen aller weiteren Messdurchgänge unterscheidet oder zumindest zu einer der Trägerfrequenzen der weiteren Messdurchgänge gleich ist und sofern ein Funkknoten während des Messprozesses als Transmitter arbeitet der mindestens eine Transmitter jeweils während mindestens eines Zusatzsendezeitraums vor oder während oder nach einem der Messdurchgänge ein Sendsignal mit einer Trägerfrequenz aussendet, wobei das Sendesignal von den Transceivern empfangen wird. In einer Weiterbildung sind alle während eines Messprozesses gesendeten Signale zueinander kohärent.

Es versteht sich, dass, sofern vorhanden, jeder Receiver alle oder zumindest einen Teil der von den Transceivern während der mindestens zwei Messdurchgänge ausgesandten Signale empfängt.

Sofern der weitere Funkknoten während des Messprozesses auch als Transceiver arbeitet, nimmt dieser Transceiver als ein weiterer Transceiver an den mindestens zwei Messdurchgängen teil.

Sofern der weitere Funkknoten als Transmitter arbeitet, versteht es sich, dass sich der Zusatzsendezeitraum und die Sendezeiträume der Transceiver nicht überschneiden bzw. die Funkknoten nicht gleichzeitig senden. Der Zusatzsendezeitraum ist in einen oder mehrere oder alle Messdurchgänge eingegliedert, so dass der Zusatzsendezeitraum nach einem der Sendezeiträume der Transceiver und vor einem weiteren Sendezeitraum eines weiteren Transceivers liegt. Alternativ liegt der Zusatzsendezeitraum vor und/oder nach einem oder mehreren oder allen Messdurchgängen. Bevorzugt sendet der Transmitter während jedes Messdurchgangs einmal, wobei eine Trägerfrequenz des Sendesignals des Transmitters für jeden Messdurchgang einen anderen Wert annimmt. Besonders bevorzugt werden die Trägerfrequenzen der Sendesignale der Transmitter in derselben Weise geändert wie die Trägerfrequenzen der Transceiver.

Der Messdurchgang wird bevorzugt mehrfach wiederholt, wobei die Trägerfrequenz bei jeder Wiederholung innerhalb eines vorgegebenen

Frequenzbereichs verändert wird. Beispielsweise wird ein sogenannter Frequenz-Sweep durchgeführt.

Gemäß einer anderen Ausführungsform umfasst der Messprozess mindestens einen Abgleichsmessschritt, wobei während des Abgleichsmessschritts kein Funkknoten der Funkknotenmenge ein Signal sendet und mindestens ein Funkknoten der Funkknotenmenge einen Störsignalanteil empfängt und mindestens ein Ergebnis des Abgleichsmessschritts in dem Vergleichsprozess herangezogen wird.

In dem Abgleichsmessschritt werden allein die Störsignale der anwesenden Störquellen von mindestens einem der Funkknoten der Funkknotenmenge erfasst. Diese Information kann zusätzlich mit den Ergebnissen des ersten und zweiten Durchgangs verglichen werden. Alternativ oder ergänzend wird ein von dem Testfunkknoten während eines Abgleichsmessschritts empfangenes Signal im Rahmen des Vergleichsschritts mit einem von einem Referenzfunkknoten während eines Abgleichsmessschritts empfangenen Signal verglichen und das Ergebnis dieses Vergleichs als weitere Basis für den Plausibilitätstest bzw. die Entscheidung über die Zugehörigkeit herangezogen.

Gemäß einer weiteren Ausführungsform wird in dem Auswerteprozess das empfangene Signal mit einem Referenzsignal verglichen und der Störsignalanteil anhand von Abweichungen von dem Referenzsignal ermittelt. Das Referenzsignal ist gemäß einer Weiterbildung ein unmoduliertes, sinusförmiges Signal mit der Trägerfrequenz des entsprechenden gesendeten Signals.

Es versteht sich, dass das Referenzsignal dem gesendeten Signal entsprechend ausgebildet ist und im Fall eines unmodulierten Sendesignals einer Sinusfunktion entspricht. Der Vergleich zwischen dem empfagenen Signal und dem Referenzsignal kann beispielsweise mittels Differenzbildung vorgenommen werden.

In einer anderen Weiterbildung wird zu jedem Störsignalanteil eine Anzahl von Störquellen und/oder eine Position mindestens einer Störquelle und/oder eine Art mindestens einer Störquellen bestimmt. Als Art der Störquelle wird beispielsweise die Art der Modulation des empfangenen Signals bzw. Störsignalanteils bezeichnet.

Gemäß einer anderen Weiterbildung werden der Messprozess und der Auswerteprozess mehrfach durchgeführt und anhand der mehreren Störsignalanteil ein Bewegungsprofil von Störquellen bestimmt.

In einer Weiterbildung ist der mindestens eine Testfunkknoten mit einem Inertial-Sensor verbunden und ein mittels des Inertial-Sensors ermitteltes Bewegungsprofil des Testfunkknotens wird in dem Vergleichsschritt mit dem anhand von Störsignalanteilen ermittelten Bewegungsprofil verglichen.

In einer alternativen Ausführungsform wird innerhalb jedes Messdurchgangs das als zweites ausgesandte Sendesignal und jedes folgende gesendete Signal zumindest aus einem Teil eines der während desselben Messdurchgangs empfangenen Signale gebildet.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die laterale und die vertikale Erstreckung ist nicht maßstäblich und weist, sofern nicht anders angegeben, auch keine ableitbaren geometrischen Relationen zueinander auf. Darin zeigt:

Figur 1    Referenzsystem und Testfunkknoten in einer ersten Ausführungsform,

Figur 2    Referenzsystem und Testfunkknoten in einer zweiten Ausführungsform,

Figur 3    Verkettung von Störungsverteilungen im Falle eines Relais-Angriffs,

Figur 4    Formierung einer erweiterten Funkumgebungs-ID in Verbindung mit Klassifikations-und Mustererkennungsverfahren zur Identifikation und Abwehr von Relais Angriffen,

Figur 5    zeitlicher Messablauf.

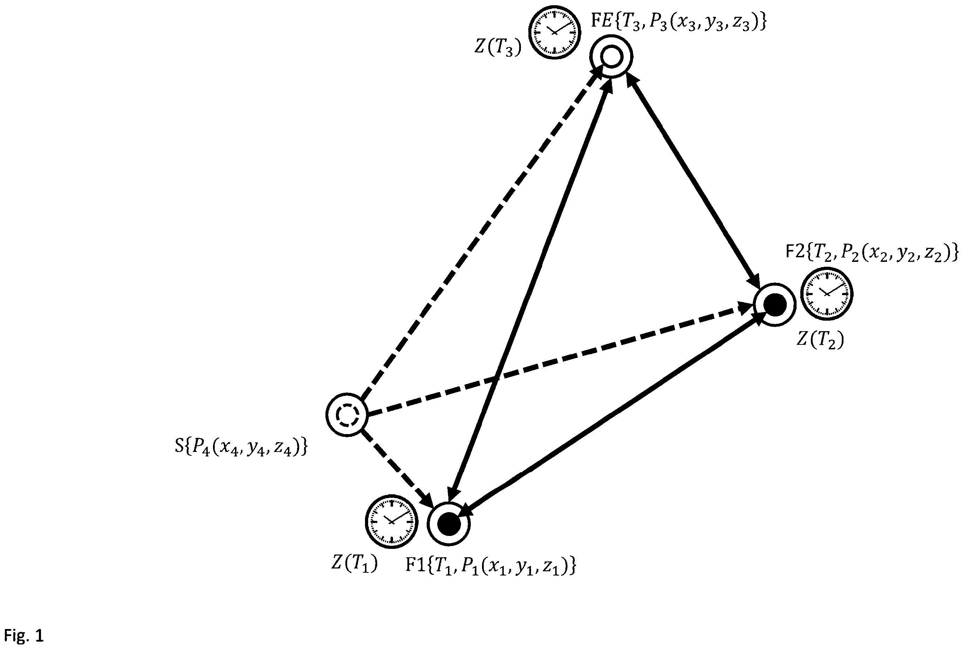

Ein erste erfindungsgemäße Ausführungsform eines Messprozesses des Verfahrens zur Prüfung der Zugehörigkeit von Funkknoten zu einer Funcknotenumgebung anhand von Störsignalprofilen ist in Figur 1 veranschaulicht. Dargestellt ist eine Minimalkonfiguration aus einer Funkknotenmenge mit drei Funkknoten F1, F2 und FE sowie eine Stöhrstrahlungsquelle S. Die Darstellung wurde im Sinne der Übersichtlichkeit auf eine flächenhafte Abbildung reduziert. Die zwei Funkknoten F1 und F2 arbeiten als Transceiver.

Der weitere, hier dritte Funkknoten FE arbeitet während des Messprozesses in einem von drei Modi, nämlich entweder ausschließlich als Receiver, ausschließlich als Transmitter oder ebenfalls als Transceiver. Für alle Funcknoten gilt, dass der Sendebetrieb nur in zugeordneten Zeitbereichen, den Sendezeiträumen, stattfindet und die Funkknoten der Funkknotenmenge nie gleichzeitig senden.

Die Stöhrstrahlungsquelle S sendet dahingegen unabhängig von den Funcknoten der Funkknotenmenge, so dass sich die Signale der Stöhrstrahlungsquelle S und die Signale des sendenden Funkknotens bei den empfangenden Funkknoten bzw. in den empfangenen Signalen überlagern.

Zwei der drei Funkknoten F1, F2 und FE sind dabei Referenzfunkknoten, die zueinander beabstandet sind und deren Abstand zueinander bekannt ist. Einer der drei Funkknoten F1, F2 und FE ist ein Testfunkknoten, dessen Abstand und/oder Position unbekannt ist und Zugehörigkeit überprüft wird. Die Referenzfunkknoten bilden mit ihren zumindest relativ zueinander bekannten Abständen eine Basis für die Einführung eines Referenzkoordinatensystems. Es versteht sich, dass das Referenzkoordinatensystem in seiner Dimension von der Anzahl der Referenzfunkknoten mit verschiedenen Positionen im Raum bestimmt wird.

Entsprechend der vorgestellten Annahmen werden die Einheiten auf Punkte im Raum $P_i(x_i, y_i, z_i)$ reduziert; diese befinden sich im Mittelpunkt der zugehörigen Kreise. Die Ausbreitungswege werden durch Strahlen dargestellt, die in den zu den Einheiten gehörenden Punkten beginnen und enden. Durchgängige Strahlen kennzeichnen direkte Ausbreitungswege zwischen Funkknoten. Gestrichelte Strahlen kennzeichnen die direkten Ausbreitungswege zwischen der Störstrahlungsquelle S und den Funkknoten. Strahlen mit zwei Pfeilen zeigen an, dass der Ausbreitungspfad in beiden Richtungen durchlaufen wird. Strahlen mit nur einem Pfeil zeigen an, dass der Ausbreitungspfad nur in einer Richtung durchlaufen wird.

Im dargestellten Ausführungsbeispiel arbeitet der weitere bzw. hier dritte Funkknoten FE während des Messprozesses ebenfalls als Transceiver, die zwischen dem dritten Funkknoten FE und den Transceivern F1 und F2 verlaufenden Strahlen weisen entsprechend zwei Pfeile auf.

Eine wichtige Eigenschaft des dargestellten Systems ist es, Nutzsignal, also die von den anderen Funkknoten der Funkknotenmenge stammenden Signalanteile, und Störungsenergie, also den von der Störquelle stammenden Signalanteil, in gewissem Maß zu trennen und dabei zu charakterisieren. Dies ist möglich, da Eigenschaften der gesendeten Signale bekannt sind und als Referenzsignal genutzt werden können, um die Nutzanteile des Messergebnisses zu separieren.

Es versteht sich, dass für den zu Analysierenden Störstrahlungsanteil in Figur 1 rein symbolisch nur eine einzige Störquelle S dargestellt ist. Die Störanteile bestehen grundsätzlich aus Strahlung durch weitere in der Nähe befindliche Systeme, wobei auch rauschartige Quellen enthalten sein können. Darüber hinaus können auch Implementierungsspezifische Aspekte zur Verzerrung der Messergebnisse führen. Diese Störungsgrößen als Abweichungen vom idealen Systemverhalten lassen sich durch entsprechende Modelle abbilden und damit die zugehörigen Parameter extrahieren. Ist der Nutzsignalanteil im Verhältnis zur Rausch-bzw. Störenergie für eine entsprechende Extraktion ausreichend, so können in einer weitergehende Analyse des Nutzsignalanteils auch Kanaltransferfunktionen, Zeit und Frequenzoffset ermittelt werden. Diese Vorgehensweise ist aber nicht Bestandteil des erfindungsgemäßen Verfahrens, das sich auf die Extraktion von Parametern der empfangenen Störsignale konzentriert.

Eine Umgebung zeichnet sich aufgrund der verschiedensten anwesenden Objekte durch einen hohen Grad an Individualität aus. Daher lassen sich diese Eigenschaften zur Merkmalsextraktion verwenden. Diese bilden dann die Basis für eine Funkumgebungsbasierte Authentifizierung.

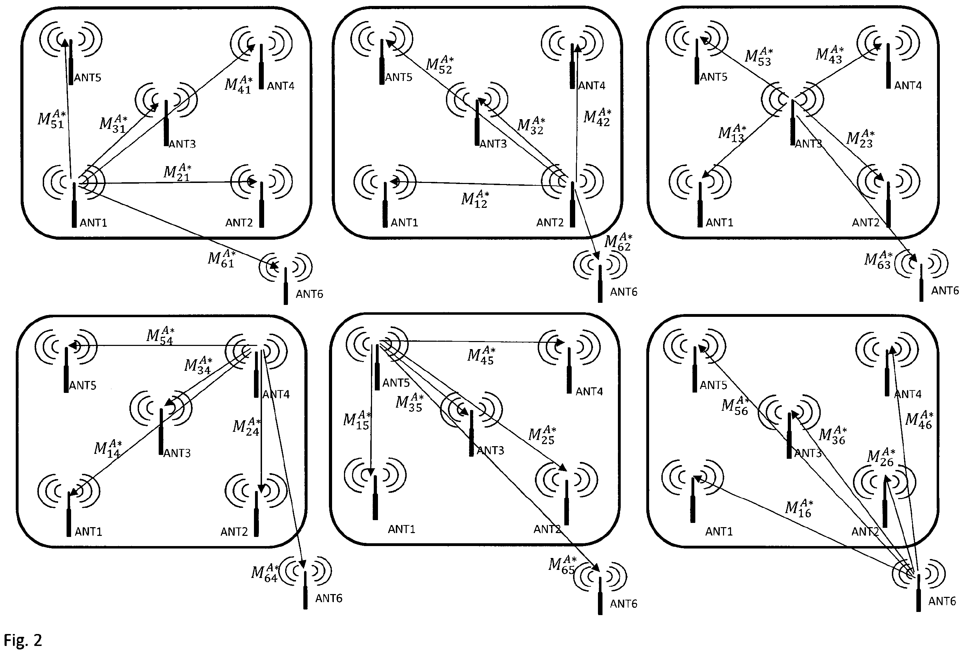

Im Folgenden wird der Einfluss von Störstrahlen auf ein Funksystem am Beispiel eines aus einem Referenzsystem mit fünf Referenzfunkknoten ANT1, ANT2, ANT3, ANT4 und ANT5 gebildeten Zugangssystems erläutert (eingerahmte Funkknoten der Figur 2), wobei über jeden Referenzfuncknoten jeweils elektromagnetische Strahlung erzeugt und auch empfangen werden kann. Die Funkknotenmenge umfasst außerdem einen Testfuncknoten ANT6, den Schlüssel, wobei der Testfunkknoten ANT6 ebenfalls elektromagnetische Strahlung erzeugen und empfangen kann.

Die Figur 2 veranschaulicht auch einen vollständigen Messdurchgang des Systems.

Zuerst soll das Referenzsystem betrachtet werden: Jede Antenne des Referenzsystems erzeugt während der Messung ein Signal, das der Überlagerung der Strahlung aller Quellen an ihrer Position entspricht. Aufgrund der Kenntnis des jeweiligen von dem System selbst erzeugten Signals, welches als Referenz-Signal hinterlegt sein kann, lassen sich auch Eigenschaften von nicht zu dem System gehörenden Quellen elektromagnetischer Strahlung, die hier als Störquellen bezeichnet werden (nicht dargestellt), separieren. Die Störsignalanteile können für das Referenzsystem in einer Matrix $Q^A(j\omega,t)$ mit den Elementen $Q_{ij}^A(j\omega)$ zusammengefasst werden, wobei mit A die Umgebung des Referenzsystems bezeichnet wird.

$$Q^A(j\omega,t) = \begin{bmatrix} Q_{11}^A & Q_{12}^A & Q_{13}^A & Q_{14}^A & Q_{15}^A \\ Q_{21}^A & Q_{22}^A & Q_{23}^A & Q_{24}^A & Q_{25}^A \\ Q_{31}^A & Q_{32}^A & Q_{33}^A & Q_{34}^A & Q_{35}^A \\ Q_{41}^A & Q_{42}^A & Q_{43}^A & Q_{44}^A & Q_{45}^A \\ Q_{51}^A & Q_{52}^A & Q_{53}^A & Q_{54}^A & Q_{55}^A \end{bmatrix}$$

Im Gegensatz zur Extraktion von der Kanalübertragungsfunktion $H_{ij}^A(j\omega)$ und des Zeit- und Frequenz-Offset $T_{offs,ij}^A$, $f_{off,ij}^A$ steht hier nicht der Nutzsignalanteil (der Anteil der empfangenen Energie, die vom System selber ausgesendet wird) im Mittelpunkt des Interesses, sondern der Störsignal- bzw. Rauschanteil des Messergebnisses. Der Anteil der Störungsenergie, also der Störsignalanteil am Messergebnis lässt sich extrahieren, wenn das Nutzsignal in seinen Eigenschaften grundsätzlich bekannt ist und als Referenzsignal dienen kann, z.B. ein unmoduliertes Sendesignal mit bekannter Trägerfrequenz. Gegebenenfalls kann ein Referenzersatzsignal durch Näherung des empfangenen Signals erzeugt werden, wenn nicht alle Eigenschaften des Nutzsignals bekannt sind.

Auch die Ergebnisse von Systemoperationen wie Kanalbelegungsmessungen (CCA - Clear Channel Assessment) können zur Erzeugung dieser Elemente benutzt werden. Die Elemente $Q_{ii}^A(j\omega,t)$, die hier fett markiert sind, können je nach Systemauslegung unterschiedlich interpretiert werden. Verfügt das System über die Fähigkeit gesendete und empfangene Energie zu trennen (hohe Isolationseigenschaften erforderlich), so entsteht ein Bild der Übertragungsfunktion der jeweiligen Antenne zu sich selbst und ein entsprechender Parameter zur Ausprägung der Energie durch anderweitiger Quellen. Somit kann eine Messgröße, die die Eigenschaften bzw. Größenordnung der elektromagnetischen Energie von Störquellen am Ort der jeweiligen Antenne beschreibt, abgeleitet werden, indem alle Antennen gemäß einem dritten Messabschnitt in den Empfangsmode geschaltet werden. In diesem Fall trägt das System nicht zur Verteilung im Umfeld bei; es wird ausschließlich die Energie anderer Quellen zum jeweiligen Zeitpunkt im abgetasteten Frequenzbereich ermittelt.

Die Eigenschaften der Störstrahlenenergie sind sehr spezifisch für eine konkrete Funkumgebung und sind darüber hinaus durch ihr zeitlich nichtstationäres Verhalten gekennzeichnet. Daher entsprechen die jeweiligen Werte $Q_{ij}^A(j\omega,t)$ der empfangenen Störstrahlungsenergie, also der Störsignalanteil, zum Zeitpunkt der jeweiligen Messung und können damit für die Authentifizierung über Merkmalserkennung herangezogen werden.

Im Folgenden wird die Interaktion mit dem Testfunkknoten betrachtet: Ein Zugangssystem, wie das vorgestellte Referenzsystem, interagiert in der Regel mit anderen Komponenten, die Teil eines größeren Gesamtsystems sind und daher Zugriff auf System-Ressourcen bekommen sollen. Im Falle eines Zugangssystems ist die Lösung darauf ausgerichtet, weitere Objekte zu identifizieren und Ihren Zugriff auf Zugangsbereiche zu ermöglichen. Allein durch ihre Anwesenheit (Veränderung der Ausbreitungseigenschaften durch zusätzliche Reflexionen) und Ihre Funktion (Aussenden von elektromagnetischer Strahlung) verändern sie in gewissem Maße die Funkumgebung bzw. erweitern selbige.

Diese Veränderungen sollen in der Folge betrachtet werden. Das in der Figur 2 gezeigte Zugangssystem in Anwesenheit des Testfunkknotens ANT6 stellt eine solche erweiterte Funkumgebung **A**\* dar.

Das Eintreten eines weiteren Knotens führt zu Veränderungen der Ausbreitungsbedingungen. In dem konkreten Fall eines Schlüssels ist der Einfluss des Schlüssels in erweitertem Sinn zu verstehen, da der Schlüssel im Zusammenhang mit seinem Träger, einer Person, die Funkumgebung beeinflusst.

Grundsätzlich kann ein Referenzsystem im einfachsten Fall allein aufgrund von einem geänderten Ausbreitungsverhalten auf Veränderungen im Umfeld schließen. Positionierung, Bewegungsdetektion bis hin zur Bewegungslokalisierung sind auch auf passivem Wege möglich.

Im aktiven Fall können alle Antennen (einschließlich die Antennen der zusätzlichen Testfunkknoten) grundsätzlich sowohl Signale senden als auch elektromagnetische Energie empfangen und die empfangenen Signale können hinsichtlich Nutz-und Störsignalverlauf als auch bzgl. der Rauscheigenschaften ausgewertet werden. Die Erweiterung des Systems um zusätzliche Testfunkknoten führt zu einer Erweiterung der Matrix der zu extrahierenden zeitvarianten Aussendungen durch andere Systeme bzw. Störquellen $Q_{ij}^{A^*}(j\omega) = f\left(I_{ij}^{A^*}(j\omega), N_{ij}^{A^*}(j\omega)\right)$. Weiterhin erweitert sich auch der Raum verfügbarer Knoten-Parameter, wie am Beispiel von Frequenz- und Zeit-Offsets $T_{offs,ij}^{A^*}$ and $f_{offs,ij}^{A^*}$ ersichtlich ist.

Durch Einschluss des mindestens einen Testfunkknotens ANT6 in den Messprozess ist es möglich, die Merkmale des Funkumfeldes A zu erweitern, so dass charakteristische Merkmale einer erweiterten Funkumgebung A* entstehen. Die entsprechende Matrix $Q^{A^*}$ erweitert sich ebenfalls um eine Zeile und eine Spalte je Testfunkknoten:

$$Q^{A^*} = \begin{bmatrix} Q_{11}^{A^*} & Q_{12}^{A^*} & Q_{13}^{A^*} & Q_{14}^{A^*} & Q_{15}^{A^*} & Q_{16}^{A^*} \\ Q_{21}^{A^*} & Q_{22}^{A^*} & Q_{23}^{A^*} & Q_{24}^{A^*} & Q_{25}^{A^*} & Q_{26}^{A^*} \\ Q_{31}^{A^*} & Q_{32}^{A^*} & Q_{33}^{A^*} & Q_{34}^{A^*} & Q_{35}^{A^*} & Q_{36}^{A^*} \\ Q_{41}^{A^*} & Q_{42}^{A^*} & Q_{43}^{A^*} & Q_{44}^{A^*} & Q_{45}^{A^*} & Q_{46}^{A^*} \\ Q_{51}^{A^*} & Q_{52}^{A^*} & Q_{53}^{A^*} & Q_{54}^{A^*} & Q_{55}^{A^*} & Q_{56}^{A^*} \\ Q_{61}^{A^*} & Q_{62}^{A^*} & Q_{63}^{A^*} & Q_{64}^{A^*} & Q_{65}^{A^*} & Q_{66}^{A^*} \end{bmatrix}$$

Die einzelnen Merkmale haben aufgrund des zeitvarianten Verhaltens der verschiedenen Systeme nur eine begrenzte Gültigkeit. Dieses nichtstationäre Verhalten ist bei den Integritäts-und Plausibilitätstest zu beachten.

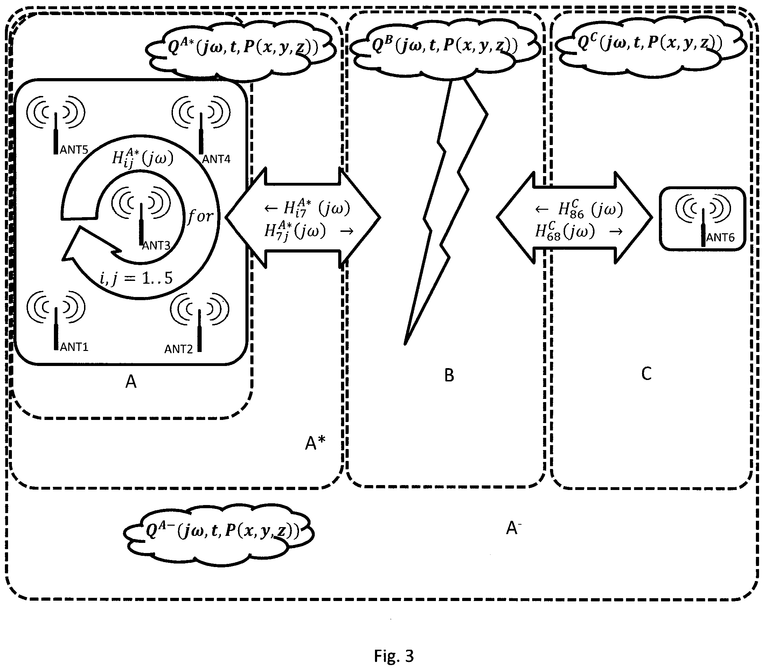

Figur 3 zeigt weiterhin den Einfluss eines Relais-Angriffs-Systems auf eine Authentifizierungsanforderung mittels des Relais-Angriffs-Systems. Dabei befindet sich das Relais-Angriffs-System in einer Funkumgebung B und der Testfunkknoten in einer Funkumgebung C.

In diesem Abschnitt wird die Ausnutzung von Störstrahlungen, die innerhalb einer Funkumgebung vorhanden sind, für die Detektion von Relaisangriffen veranschaulicht. Dazu werden die Unterschiede hinsichtlich des Störungsprofils eines regulären Authentifizierungsvorganges ($Q^{A^*}$) und eines Relais-Angriffs ($Q^{A^-}$) gegenübergestellt.

Gemäß einer Ausführungsform verschafft sich das Referenzsystem in einem Standby-Modus, in dem keine Authentifizierungsanfrage erfolgt, durch Überblicksmessungen (auch Kanal-Belegungstests und Energie-Verteilungstests über die Bandbreite genannt) einen Überblick über Störstrahlungssituation in seinem Umfeld. Dabei entsteht eine Bild der Störenergie-Verteilung $Q^A$ im Umfeld des Referenzsystems wie vorab beschrieben.

Der Eintritt des Testfunkknoten in das Funkumfeld A des Referenzsystems bewirkt eine Erweiterung der erfassbaren Störungsverteilung. Es erfolgt ein Übergang A → A* oder A→ A-.

Die jeweiligen Störungsverteilungen können durch folgende Matrizen beschrieben werden.

$$Q^{A^*}(j\omega, t, P(i,j)) = \begin{bmatrix} Q_{11}^{A^*} & Q_{12}^{A^*} & Q_{13}^{A^*} & Q_{14}^{A^*} & Q_{15}^{A^*} & Q_{16}^{A^*} \\ Q_{21}^{A^*} & Q_{22}^{A^*} & Q_{23}^{A^*} & Q_{24}^{A^*} & Q_{25}^{A^*} & Q_{26}^{A^*} \\ Q_{31}^{A^*} & Q_{32}^{A^*} & Q_{33}^{A^*} & Q_{34}^{A^*} & Q_{35}^{A^*} & Q_{36}^{A^*} \\ Q_{41}^{A^*} & Q_{42}^{A^*} & Q_{43}^{A^*} & Q_{44}^{A^*} & Q_{45}^{A^*} & Q_{46}^{A^*} \\ Q_{51}^{A^*} & Q_{52}^{A^*} & Q_{53}^{A^*} & Q_{54}^{A^*} & Q_{55}^{A^*} & Q_{56}^{A^*} \\ Q_{61}^{A^*} & Q_{62}^{A^*} & Q_{63}^{A^*} & Q_{64}^{A^*} & Q_{65}^{A^*} & Q_{66}^{A^*} \end{bmatrix}$$

$$Q^{A-}(j\omega, t, P(i,j))$$

$$= \begin{bmatrix} Q_{11}^{A-} & Q_{12}^{A-} & Q_{13}^{A-} & Q_{14}^{A-} & Q_{15}^{A-} & Q_{16}^{A-} \\ Q_{21}^{A-} & Q_{22}^{A-} & Q_{23}^{A-} & Q_{24}^{A-} & Q_{25}^{A-} & Q_{26}^{A-} \\ Q_{31}^{A-} & Q_{32}^{A-} & Q_{33}^{A-} & Q_{34}^{A-} & Q_{35}^{A-} & Q_{36}^{A-} \\ Q_{41}^{A-} & Q_{42}^{A-} & Q_{43}^{A-} & Q_{44}^{A-} & Q_{45}^{A-} & Q_{46}^{A-} \\ Q_{51}^{A-} & Q_{52}^{A-} & Q_{53}^{A-} & Q_{54}^{A-} & Q_{55}^{A-} & Q_{56}^{A-} \\ Q_{61}^{A-} & Q_{62}^{A-} & Q_{63}^{A-} & Q_{64}^{A-} & Q_{65}^{A-} & Q_{66}^{A-} \end{bmatrix}$$

Eine Betrachtung der Eigenschaften der einzelnen Elemente für zur Ableitung von Verschiedenen Klassen, die differenziert behandelt werden.

Klasse 1: $Q_{ij}^{A*,A-} \ für \ i,j = 1..5$: kennzeichnen die detektierte Störstrahlungsenergie im Umfeld des Zugangssystems; diese Elemente sind eng mit den entsprechenden Elementen der Matrix $\boldsymbol{Q^A}$ verbunden und entsprechende Eigenschaften lassen sich über Äquivalenzbeziehungen übertragen und damit auf Plausibilität prüfen. Diese Elemente werden während des Auswerteprozesses mittels des ersten Durchgangs ermittelt.

Klasse 2: : $Q_{6j}^{A*,A-} \ für \ j = 1..5$: kennzeichnen die detektierte Störstrahlungsenergie, die durch den Testfunkknoten, z.B. Schlüssel/Tag, detektiert wird, während die einzelnen Antennen des Referenzsystems ein Referenzsignal abstrahlen. Diese Elemente werden während des Auswerteprozesses mittels des zweiten Durchgangs für einen empfangenden Testfunkknoten ermittelt.

Klasse 3: $Q_{i6}^{A*,A-} \ für \ i = 1..5$: kennzeichnen die durch die einzelnen Antennen des Referenzsystems detektierte Störstrahlungsenergie während der Testfunkknoten, z.B. Schlüssel/Tag, ein Referenzsignal abstrahlt. Diese Elemente werden während des Auswerteprozesses mittels des zweiten Durchgangs für einen sendenden Testfunkknoten ermittelt.

Klasse 4: $Q_{ii}^{A*,A-} \ für \ i = 1..6$: kennzeichnen die detektierte Störstrahlungsenergie, die an einer Antenne der Funkknotenmenge ermittelt wird, wenn diese Antenne entweder gleichzeitig im Sende- und Empfangsmode arbeitet oder zusammen mit allen anderen Antennen der Funkknotenmenge nur im Empfangsmodus arbeitet. Diese Elemente werden entsprechend beispielsweise in einem Abgleichsmessschritt ermittelt.

Im Fall eines Relais-Angriffs umfassen die Messgrößen der Klasse 1 die Störungsverteilung in der Umgebung des Referenzsystems zu den Zeitpunkten, zu denen die entsprechenden Antennen im Empfangsmode betrieben werden. Aufgrund ihrer lokalen räumlichen Verteilung bilden sie ein adäquates Abbild der lokalen Störungsverteilung und dienen als Basis für eine Klassifikation.

Die Messgrößen der Klasse 1 dienen damit als Ausgangspunkt bzw. Vergleichsgrundlage für eine Integritäts- und Plausibilitätsverifikation hinsichtlich des Testfunkknotens, z.B. eines Schlüssels. Für den Vergleich wird die von dem Testfunkknoten detektierte Störstrahlungsenergie (Klasse 2) und/oder die von dem Referenzsystem im Zusammenhang mit von dem Testfunkknoten ausgesendeten Signalen detektierte Störstrahlungsenergie (Klasse 3) herangezogen.

Gemäß Klasse 4 werden die Störsignalanteile direkt bzw. nur gegen einen Rauschanteil gemessen. Damit können von einem Testknoten ermittelte Messgrößen der Klasse 4 für einen Plausibilitätstest direkt mit den von einem Referenzfunkknoten gemessenen Messgrößen der Klasse 4 verglichen werden. Die mit einem oder mehreren Referenzknoten ermittelten Messgrößen der Klasse 4 bilden außerdem ein adäquates Abbild der lokalen Störungsverteilung.

Damit ist eine Einschätzung bzw. Klassifizierung der Störungsstrahlungseigenschaften einer Umgebung möglich, die Aussagen bzgl. von Störstrahlungsquellen erlaubt, hinsichtlich:

- Vorhandensein von Störstrahlungsquellen (einfachster Fall),
- Art von Störstrahlungsquellen, z.B. über Bestimmung von Modulationsparametern,
- Anzahl von Störstrahlungsquellen,
- Lage von Störstrahlungsquellen, z.B. über Zeitdifferenzmessungen,
- Bewegung von Störstrahlungsquellen (komplexer Fall).

Diese Störquellenklassifikation führt zu höherwertigen Merkmalen und erlaubt damit eine Prüfung mit höherer Absicherung.

Bei einem Relais-Angriff werden die ausgesendeten Signale der elektromagnetischen Störungsverteilung im Umfeld des Referenzsystems $Q^A$ und zusätzlich der Störstrahlungsverteilungen um das Relais-System $Q^B$ und der Störstrahlungsenergie um das Schlüsselsystem $Q^C$ ausgesetzt. Das heißt, dass der Testknoten beim Empfang der Signale des Referenzsystems, die über das Relais-System weitergeleitet werden, einer Störungsverteilung ausgesetzt ist, die praktisch der Überlagerung der Störquellen in allen drei Umgebungen entspricht.

Diese Auswirkungen werden in folgender Gleichung zusammengefasst:

$$Q^{A-} = \begin{bmatrix} Q_{11}^{A*} & Q_{12}^{A*} & Q_{13}^{A*} & Q_{14}^{A*} & Q_{15}^{A*} & Q_{17}^{A*} \otimes Q_{78}^{B} \otimes Q_{86}^{C} \\ Q_{21}^{A*} & Q_{22}^{A*} & Q_{23}^{A*} & Q_{24}^{A*} & Q_{25}^{A*} & Q_{27}^{A*} \otimes Q_{78}^{B} \otimes Q_{86}^{C} \\ Q_{31}^{A*} & Q_{32}^{A*} & Q_{33}^{A*} & Q_{34}^{A*} & Q_{35}^{A*} & Q_{37}^{A*} \otimes Q_{78}^{B} \otimes Q_{86}^{C} \\ Q_{41}^{A*} & Q_{42}^{A*} & Q_{43}^{A*} & Q_{44}^{A*} & Q_{45}^{A*} & Q_{47}^{A*} \otimes Q_{78}^{B} \otimes Q_{86}^{C} \\ Q_{51}^{A*} & Q_{52}^{A*} & Q_{53}^{A*} & Q_{54}^{A*} & Q_{55}^{A*} & Q_{57}^{A*} \otimes Q_{78}^{B} \otimes Q_{86}^{C} \\ Q_{71}^{A*} \otimes Q_{87}^{B} \otimes Q_{68}^{C} & Q_{72}^{A*} \otimes Q_{87}^{B} \otimes Q_{68}^{C} & Q_{73}^{A*} \otimes Q_{87}^{B} \otimes Q_{68}^{C} & Q_{74}^{A*} \otimes Q_{87}^{B} \otimes Q_{68}^{C} & Q_{75}^{A*} \otimes Q_{87}^{B} \otimes Q_{68}^{C} & Q_{66}^{A*} \end{bmatrix}$$

Die Überlagerung der einzelnen Störverteilung wird durch den x-Operator ausgedrückt.

Da sich die Antenne ANT7 des Relais-Systems (nicht dargestellt) in der erweiterten Umgebung des Referenzsystems befindet, entspricht die hier detektierte Störenergie $Q_{7j}^{A-}$ der Energie $Q_{6j}^{A*}$ für j=1..6 , die auch ein Testfunkknoten bei einem qualifizierten Zugang detektieren würde. Die an diesem Punkt detektierte Energie steht außerdem in einem plausiblen Zusammenhang mit der vom Zugangssystem detektierten Störungsverteilung $Q^A$.

Auf dem Weg zum und vom dem Testfunkknoten überlagern sich die Störstrahlungen der Relais-Umgebung $Q_{78}^{B}$ bzw. $Q_{87}^{B}$ (je nach Zeitpunkt) und die Störstrahlung in der Umgebung des (entfernten) $Q_{68}^{C}$ bzw. $Q_{86}^{C}$.

Diese zusätzlichen Störstrahlungen lassen sich mit Integritäts- und Plausibilitätstests identifizieren. Obwohl Störstrahlung nicht vorhersehbar ist, führt die allgegenwärtige Präsenz von Funksystemen insbesondere im 2,4GHz Band dazu, dass diese Merkmale eine gute Aussagekraft bzgl. der Identifikation von Relais-Attacken besitzen. Ein Relais-Angriff, der beispielsweise neben der Kompensation des direkten und der indirekten Ausbreitungswege auch noch eine Identifikation und Korrektur von Störsignalen vornimmt und dabei Zeitlimits einhält, wird als nicht realisierbar eingeschätzt.

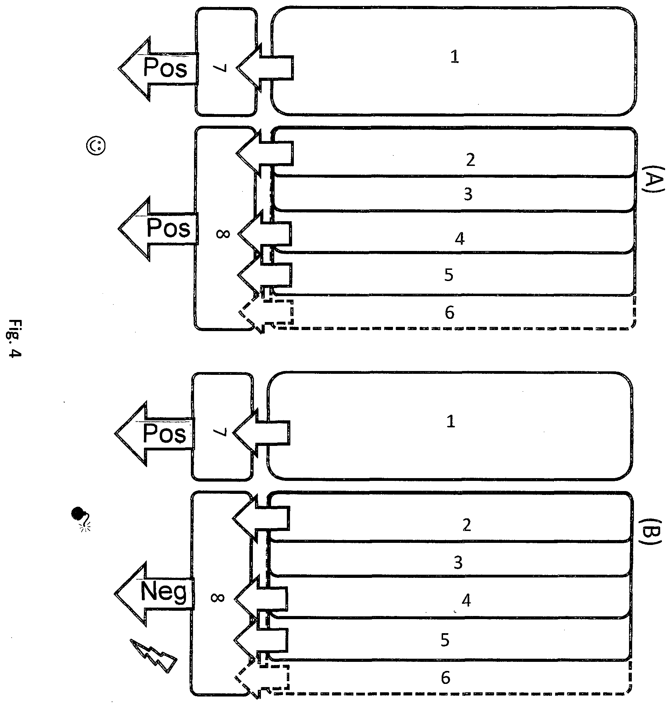

In der Figur 4 ist veranschaulicht, wie eine Authentifizierung durch Kombination des erfindungsgemäßen Verfahrens basierend auf der Störsignalanalyse mit weiteren Testverfahren kombiniert und so eine besonders zuverlässige Ermittlung von Relais-Attacken umsetzbar ist.

Auf der linken Seite (A) wird die Authentifizierung positiv beschieden und ein Zugang gewährt, während auf der rechten Seite (B) ein Relais-Angriff erkannt und der Zugang verwehrt wird.

Dabei werden folgenden Schritte parallel ausgeführt: Authentifizierung mit kryptographischen Methoden (Signaturen, MAC,...) 1, Schmal-bandage Umlaufzeitmessung 2, Bestimmen der Systemübertragungsfunktionen (Kanaltransferfunktionen oder Kanalimpulsantworten) 3, Störanteilbestimmung 4, Bestimmen von Zeit- und Frequenzoffsets 5, Bewegungsprofilbestimmung durch Inertialsensorik 6.

In einem Schritt 7 wird die Authentifizierung mittels kryptogrphischer Methoden 1 als Integritätsprüfung ausgewertet. Ein Relais-Angriff ist gegebenenfalls nicht erkennbar, so dass (A) wie (B) positiv beschieden werden (pass).

Die Schritte 2 bis 6 können alle durchgeführt werden, ebenso kann nur ein Teil dieser Testverfahren durchgeführt werden. Nach einer Klassifikation und Mustererkennung der Ergebnisse der Schritte 2 bis 5 in einem Schritt 8 wird der Relais-Angriff sicher erkannt und entsprechend negativ beschieden (fail), so dass im Ergebnis eine Authentifizierung des Relais-Angriffs scheitert.

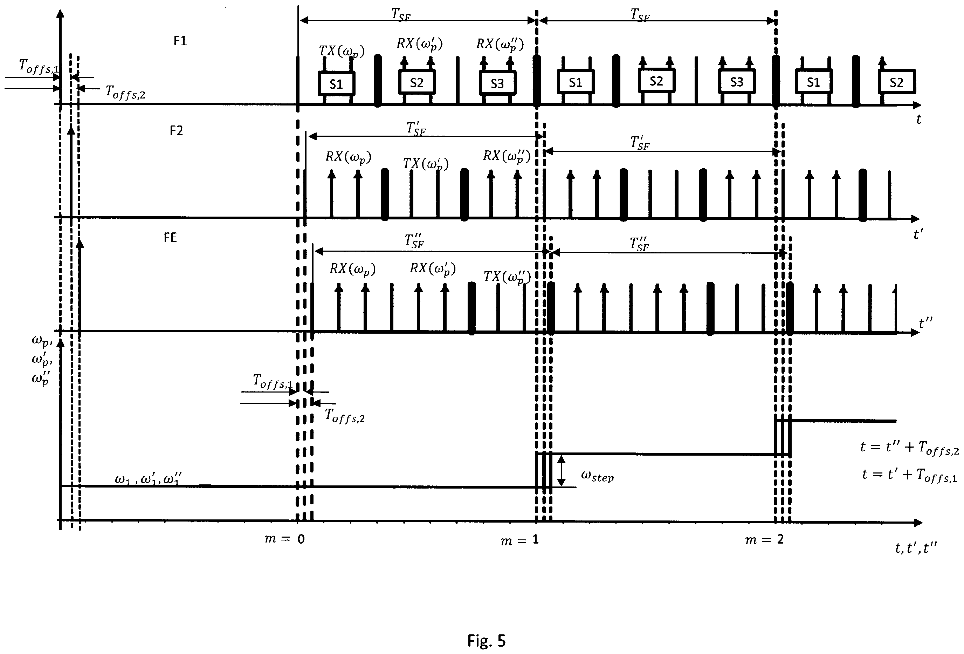

In der Figur 5 ist ein zeitlicher Ablauf eines Messprozesses in einer ersten Ausführungsform dargestellt. Während des Messprozesses arbeiten alle drei Funkknoten der Funkknotenmenge, also die beiden Referenzfunkknoten sowie der Testfunkknoten als Transceiver.

Im oberen Teil der Figur 5 sind die Operation der drei Funkknoten über mehrere Messdurchgänge gezeigt, wobei jede Zeile einem Funkknoten entspricht. Die Pfeile stellen jeweils einen Sample und Sample-Zeitpunkt eines empfangenen Signals dar. Fette Balken kennzeichnen einen Übergang von dem Empfangsmodus auf den Sendemodus und umgekehrt. Die Striche ohne Pfeil verdeutlichen das Mitlaufen des jeweiligen Zeitgebers bzw. den Erhalt der jeweiligen Zeitbasis auch während sich ein Funkknoten in dem Sendemodus befindet.

Im unteren Teil der Figur 5 ist der Verlauf der Trägerfrequenz $\omega_p$ dargestellt.

Alle Funkknoten der Funkknotenmenge arbeiten in ihrer eigenen Zeitbasis T1, T2 bzw. T3, vorgegeben von dem jeweiligen Zeitgeber Z(T1), Z(T2) bzw. Z(T3), jeweils mit einer eigenen Zeiteinheit $T_{MU}$, $T'_{MU}$ bzw. $T'_{MU}$, auf deren Basis alle Aktionen erfolgen. Die Zeiteinheiten $T_{MU}$, $T_{MU}$ bzw. $T''_{MU}$ bzw. das jeweils definierte Schrittmaß wird durchgehend über eine oder mehrere Wiederholungen des Messdurchgangs aufrechterhalten. Die Zeitachsen T2 bzw. T3 sind um den Zeitversatz $T_{offs,12}$ bzw. $T_{offs,13}$ gegenüber der Zeitachse T1 verschoben.

Der Index m bezeichnet hier den Index der Wiederholung des Messdurchgangs, wobei in diesem Fall mit Beginn jedes Messdurchgangs die Frequenz der Frequenzgeneratoren, d.h. die jeweilige Trägerfrequenz, geändert wird. Der Index m hat einen Wertebereich $m=0,1,...,(m_{max}-1)$. $m_{max}$ wird durch die konkrete Ausführung bestimmt und ist u.a. von der Anzahl der Frequenzen abhängig, für die eine Systemübertragungsfunktion ermittelt werden soll.

Zur Unterscheidung der entsprechenden Größen der einzelnen Funkknoten sind alle Größen durch unterschiedliche Anstriche (z.B. für die Frequenzen: $F1:f_p$, $F2:f'_p$, $FE:f''_p$) gekennzeichnet.

Jeder Funkknoten bildet für sich ein zeitdiskretes System mit $T1=n \cdot T_{MU}+m \cdot T_{SF}$ , $T2=n \cdot T'_{MU}+m \cdot T'_{SF}$ bzw. $T3=n \cdot T'_{MU}+m \cdot T''_{SF}$, wobei der Index n die Zeitschritte der Länge $T_{MU}$ innerhalb eines Messdurchgangs bezeichnet.

## Patentansprüche

1. Verfahren zur Prüfung der Zugehörigkeit von Funkknoten zu einer Funkumgebung mit einer Funkknotenmenge von wenigstens drei zueinander beabstandeten Funkknoten mittels einer Auswertung von Störsignalanteilen, wobei

   - jeder Funkknoten der Funkknotenmenge jeweils eine Funkschnittstelle und einen eigenen Zeitgeber aufweist,
   - zwischen den Zeitgebern der Funkknoten jeweils ein Zeitversatz besteht,
   - mindestens zwei Funkknoten der Funkknotenmenge Referenzfunkknoten sind, ein Abstand jedes Referenzfunkknotens zu den weiteren Referenzfunkknoten bekannt ist und die Referenzfunkknoten ein Referenzsystem mit einer Funkumgebung bilden,
   - mindestens ein Funkknoten der Funkknotenmenge ein Testfunkknoten ist und eine Zugehörigkeit des mindestens einen Testfunkknotens zu der Funkumgebung des Referenzsystems geprüft wird,
   - das Verfahren einen Messprozess, einen anschließenden Auswerteprozess und einen Vergleichsprozess umfasst,
   - während des Messprozesses von Funkknoten der Funkknotenmenge Signale mit einer Trägerfrequenz gesendet und empfangen werden,
   - während des Messprozesses mindestens zwei Funkknoten der Funcknotenmenge als Transceiver arbeiten und mindestens ein Funkknoten während des Messprozesses ausschließlich als Transmitter oder ausschließlich als Receiver oder als Transceiver arbeitet,
   - der Auswerteprozess einen Auswerteschritt umfasst,
   - in dem Auswerteschritt anhand eines von einem ersten Funkknoten der Funkknotenmenge gesendeten und von einem zweiten Funkknoten der Funkknotenmenge empfangenen Signals ein Störsignalanteil ermittelt wird,
   - während des Auswerteprozesses in einem ersten Durchgang der Auswerteschritt mindestens einmal für mindestens ein Paar von Referenzfunkknoten ausgeführt wird,
   - während des Auswerteprozesses in einem zweiten Durchgang der Auswerteschritt mindestens einmal für einen Testfunkknoten und einen Referenzfunkknoten ausgeführt wird,
   - in einem Vergleichsprozess anhand mindestens eines Ergebnisses des ersten Durchgangs und mindestens eines Ergebnisses des zweiten Durchgangs die Zugehörigkeit zu einer Funkumgebung positiv oder negativ beschieden wird.

2. Verfahren nach Anspruch 1, **dadurch gekennzeichnet, dass**

   - der Messprozess mindestens zwei Messdurchgänge umfasst,
   - in jedem Messdurchgang nacheinander von jedem Transceiver jeweils während eines Sendezeitraums ein Sendesignal mit einer Trägerfrequenz ausgesandt und das ausgesandte Sendesignal zumindest von den weiteren Transceivern während eines Empfangszeitraums empfangen wird,
   - die Sendesignale der Transceiver zumindest während eines Messdurchgangs zueinander kohärent sind,
   - sich die Trägerfrequenz jedes Messdurchgangs von den Trägerfrequenzen aller weiteren Messdurchgänge unterscheidet oder zumindest zu einer der Trägerfrequenzen der weiteren Messdurchgänge gleich ist,
   - sofern ein Funkknoten während des Messprozesses als Transmitter arbeitet der mindestens eine Transmitter jeweils während mindestens eines Zusatzsendezeitraums vor oder während oder nach einem der Messdurchgänge ein Sendsignal mit einer Trägerfrequenz aussendet, wobei das Sendesignal von den Transceivern empfangen wird.

3. Verfahren nach Anspruch 2, **dadurch gekennzeichnet, dass** alle während eines Messprozesses gesendeten Signale zueinander kohärent sind.

4. Verfahren nach einem der vorhergehenden Ansprüche, **dadurch gekennzeichnet, dass** der Messprozess mindestens einen Abgleichsmessschritt umfasst, während des Abgleichsmessschritts kein Funkknoten der Funcknotenmenge ein Signal sendet und mindestens ein Funkknoten der Funkknotenmenge einen Störsignalanteil empfängt und mindestens ein Ergebnis des Abgleichsmessschritts in dem Vergleichsprozess herangezogen wird.

5. Verfahren nach einem der vorhergehenden Ansprüche, **dadurch gekennzeichnet, dass** in dem Auswerteprozess das empfangene Signal mit einem Referenzsignal verglichen und der Störsignalanteil anhand von Abweichungen von dem Referenzsignal ermittelt wird.

6. Verfahren nach Anspruch 5, **dadurch gekennzeichnet, dass** das Referenzsignal ein unmoduliertes, sinusförmiges Signal mit der Trägerfrequenz des entsprechenden gesendeten Signals ist.

7. Verfahren nach einem der vorhergehenden Ansprüche, **dadurch gekennzeichnet, dass** zu jedem Störsignalanteil eine Anzahl von Störquellen und/oder eine Position mindestens einer Störquelle und/oder eine Art mindestens einer Störquellen bestimmt wird.

8. Verfahren nach einem der vorhergehenden Ansprüche, **dadurch gekennzeichnet, dass** der Messprozess und der Auswerteprozess mehrfach durchgeführt werden und anhand der mehreren Störsignalanteil ein Bewegungsprofil von Störquellen bestimmt wird.

9. Verfahren nach Anspruch 8, **dadurch gekennzeichnet, dass** der mindestens eine Testfunkknoten mit einem Inertial-Sensor verbunden ist und ein mittels des Inertial-Sensors ermitteltes Bewegungsprofil des Testfunkknotens in dem Vergleichsschritt mit dem anhand von Störsignalanteilen ermittelten Bewegungsprofil verglichen wird.

10. Verfahren nach einem der Ansprüche 2 bis 9, **dadurch gekennzeichnet, dass** innerhalb jedes Messdurchgangs das als zweites gesendete Signal und jedes folgende gesendete Signal zumindest aus einem Teil eines der während desselben Messdurchgangs empfangenen Signale gebildet wird.

## Claims

1. Method of checking the association of radio nodes and objects with respect to a radio environment with a radio node number of at least three mutually spaced radio nodes by means of evaluation of interference signal components, wherein

   - each radio node of the radio node number has a respective radio interface and an individual time transmitter,
   - a respective time offset is present between the time transmitters of the radio nodes,
   - at least two radio nodes of the radio node number are reference radio nodes, a spacing of each reference radio node from the further reference radio nodes is known and the reference radio nodes form a reference system with a radio environment,
   - at least one radio node of the radio node number is a test radio node and an association of the at least one test radio node with the radio environment of the reference system is checked,
   - the method comprises a measuring process, a subsequent evaluating process and a comparison process,
   - during the measuring process signals with a carrier frequency are transmitted and received by radio nodes of the radio node number,
   - during the measuring process at least two radio nodes of the radio node number operate as transceivers and at least one radio node during the measuring process operates exclusively as a transmitter or exclusively as a receiver or as a transceiver,
   - the evaluating process comprises an evaluating step,
   - in the evaluating step an interference signal component is determined on the basis of a signal transmitted by a first radio node of the radio node number and received by a second radio node of the radio node number,
   - during the evaluating process in a first pass the evaluating step is performed at least once for at least one pair of reference radio nodes,
   - during the evaluating process in a second pass the evaluating step is performed at least once for a test radio node and a reference radio node,

- in a comparison process the association with a radio environment is decided positively or negatively on the basis of at least one result of the first pass and at least one result of the second pass.

2. Method according to claim 1, **characterised in that**

- the measuring process comprises at least two measuring passes,
- in each measuring pass a transmission signal with a carrier frequency is transmitted in succession by each transceiver respectively during a transmission time period and the transmitted transmission signal is received at least by the further transceivers during a reception time period,
- the transmission signals of the transceivers are coherent with respect to one another at least during a measuring pass,
- the carrier frequency of each measuring pass differs from the carrier frequencies of all further measuring passes or is the same as at least one of the carrier frequencies of the further measuring passes,
- insofar as a radio node operates as a transmitter during the measuring process the at least one transmitter transmits a transmission signal with a carrier frequency respectively during at least one additional transmission time period before or during or after one of the measuring passes, wherein the transmission signal is received by the transceivers.

3. Method according to claim 2, **characterised in that** all signals transmitted during a measuring process are coherent with respect to one another.

4. Method according to any one of the preceding claims, **characterised in that** the measuring process comprises at least one equalisation measuring step, during the equalisation measuring step no radio node of the radio node number transmits a signal and at least one radio node of the radio node number receives an interference signal component and at least one result of the equalisation measuring step is utilised in the comparison process.

5. Method according to any one of the preceding claims, **characterised in that** in the evaluating process the received signal is compared with a reference signal and the interference signal component is determined on the basis of differences from the reference signal.

6. Method according to claim 5, **characterised in that** the reference signal is an unmodulated sinusoidal signal with the carrier frequency of the corresponding transmission signal.

7. Method according to any one of the preceding claims, **characterised in that** number of interference sources and/or a position of at least one interference source and/or the kind of at least one interference source is or are determined with respect to each interference signal component.

8. Method according to any one of the preceding claims, **characterised in that** the measuring process and the evaluating process are performed multiple times and a movement profile of interference sources is determined on the basis of the plurality of interference signal components.

9. Method according to claim 8, **characterised in that** the at least one test radio node is connected with an inertial sensor and a movement profile, which is determined by means of the inertial sensor, of the test radio node is compared in the comparison step with the movement profile determined on the basis of the interference signal components.

10. Method according to any one of claims 2 to 9, **characterised in that** the signal transmitted as second and each following transmission signal are formed within each measuring pass from at least a part of one of the signals received during the same measuring pass.

**Revendications**

1. Procédé de vérification de l'appartenance de nœuds radio à un environnement radio avec un ensemble de nœuds radio d'au moins trois nœuds radio distants les uns des autres, au moyen d'une évaluation de fractions de signaux perturbateurs, selon lequel

- chaque nœud radio de l'ensemble de nœuds radio possède une interface radio et une horloge propre,

- il y a un décalage temporel entre les horloges de chaque nœud radio,
- au moins deux nœuds radio de l'ensemble de nœuds radio sont des nœuds radio de référence, une distance de chaque nœud radio de référence par rapport aux autres nœuds radio de référence est connue et les nœuds radio de référence forment un système de référence avec un environnement radio,
- au moins un nœud radio de l'ensemble de nœuds radio est un nœud radio d'essai et l'appartenance de l'au moins un nœud radio d'essai à l'environnement radio est vérifiée,
- le procédé comprend un processus de mesure suivi d'un processus d'évaluation et d'un processus de comparaison,
- pendant le processus de mesure de nœuds radio de l'ensemble de nœuds radio, des signaux avec une fréquence porteuse sont envoyés et reçus,
- pendant le processus de mesure, au moins deux nœuds radio de l'ensemble de nœuds radio font office d'émetteurs-récepteurs et au moins un nœud radio fait office pendant le processus de mesure exclusivement d'émetteur ou exclusivement de récepteur ou d'émetteur-récepteur,
- le processus d'évaluation comprend une étape d'évaluation,
- pendant l'étape d'évaluation, une fraction de signal perturbateur est déterminée à l'aide d'un signal envoyé par un premier nœud radio de l'ensemble de nœuds radio et reçu par un deuxième nœud radio de l'ensemble de nœuds radio,
- pendant le processus d'évaluation, dans une première séquence, l'étape d'évaluation est réalisée au moins une fois pour au moins une paire de nœuds radio de référence,
- pendant le processus d'évaluation, dans une deuxième séquence, l'étape d'évaluation est réalisée au moins une fois pour au moins un nœud radio d'essai et un nœud radio de référence,
- dans un processus de comparaison, sur la base d'au moins un résultat de la première séquence et d'au moins un résultat de la deuxième séquence, l'appartenance à un environnement radio est jugée positive ou négative.

2. Procédé selon la revendication 1, **caractérisé en ce que**

- le processus de mesure comprend au moins deux séquences de mesure,
- dans chaque séquence de mesure, un signal d'émission est envoyé avec une fréquence porteuse successivement par chaque émetteur-récepteur pendant une période d'émission et le signal d'émission envoyé est reçu au moins par les autres émetteurs-récepteurs pendant une période de réception,
- les signaux d'émission des émetteurs-récepteurs sont cohérents entre eux au moins pendant une séquence de mesure,
la fréquence porteuse de chaque passage de mesure se distingue des fréquences porteuses de toutes les autres séquences de mesure ou est égale à au moins une des fréquences porteuses des autres séquences de mesure,
- si un nœud radio fait office d'émetteur-récepteur pendant le processus de mesure, l'au moins un émetteur-récepteur envoie un signal d'émission avec une fréquence porteuse pendant au moins une période d'émission supplémentaire avant ou pendant ou après une des séquences de mesure, le signal d'émission étant reçu par les émetteurs-récepteurs.

3. Procédé selon la revendication 2, **caractérisé en ce que** tous les signaux envoyés pendant un processus de mesure sont cohérents entre eux.

4. Procédé selon une des revendications précédentes, **caractérisé en ce que** le processus de mesure comprend au moins une étape de mesure de correction, que pendant l'étape de mesure de correction, aucun nœud radio de l'ensemble de nœuds radio n'envoie un signal et au moins un nœud radio de l'ensemble de nœuds radio reçoit une fraction de signal perturbateur et qu'au moins un résultat de l'étape de mesure de correction est pris en compte dans le processus de comparaison.

5. Procédé selon une des revendications précédentes, **caractérisé en ce que**, dans le processus d'évaluation, le signal reçu est comparé avec un signal de référence et la fraction de signal perturbateur est déterminée sur la base des différences par rapport au signal de référence.

6. Procédé selon la revendication 5, **caractérisé en ce que** le signal de référence est un signal sinusoïdal non modulé avec la fréquence porteuse du signal envoyé correspondant.

7. Procédé selon une des revendications précédentes, **caractérisé en ce que**, pour chaque fraction de signal perturbateur, un nombre de sources de perturbation et/ou une position d'au moins une source de perturbation et/ou un type d'au moins une source de perturbation sont déterminés.

8. Procédé selon une des revendications précédentes, **caractérisé en ce que** le processus de mesure et le processus d'évaluation sont exécutés plusieurs fois et un profil de déplacement des sources de perturbation est déterminé sur la base des multiples fractions de signaux perturbateurs.

9. Procédé selon la revendication 8, **caractérisé en ce que** l'au moins un nœud radio d'essai est relié à un capteur inertiel et qu'un profil de déplacement du nœud radio d'essai déterminé au moyen du capteur inertiel est comparé dans l'étape de comparaison avec le profil de déplacement déterminé sur la base des fractions de signaux perturbateurs.

10. Procédé selon une des revendications 2 à 9, **caractérisé en ce qu'**à l'intérieur de chaque séquence de mesure, le signal envoyé en deuxième et chaque message envoyé ensuite est formé au moins d'une partie d'un des signaux reçus pendant la même séquence de mesure.

Fig. 1

Fig. 2

17

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009021783 A1
- DE 102015226150 A1

- US 2015208207 A1

**In der Beschreibung aufgeführte Nicht-Patentliteratur**

- Ghost In Zigbee: Energy Depletion Attakc on Zig-Bee-Based Wireless Networks. **CAO XIANGUI et al.** IEEE Internet of Things Journal. IEEE, 01. Oktober 2016, vol. 3, 816-829